# EUROPEAN PATENT APPLICATION

(11) **EP 4 822 275 A1**
(43) Date of publication of application: **14.10.2026**
(21) Application number: 26164328.2
(22) Date of filing: 12.03.2026
(51) Int. Cl.: F25B 49/02

(54) **CLIMATE CONTROL SYSTEMS FOR USE WITH HIGH GLIDE WORKING FLUIDS AND METHODS FOR DETECTING A CONCENTRATION OF REFRIGERANT IN THE WORKING FLUID**

(30) Priority: 13.03.2025 US 202519078684; 20.02.2026 US 202619546271
(71) Applicant: Copeland LP, Sidney, OH 45365-0669 (US)
(72) Inventor: WELCH, Andrew M., Sidney, Ohio 45365-0669 (US); SAUNDERS, Michael A., Sidney, Ohio 45365-0669 (US); ZHENG, Jiao, Sidney, Ohio 45365-0669 (US); ALDREDGE, Lonnie, Sidney, Ohio 45365-0669 (US)
(74) Representative: J A Kemp LLP

(57) **Abstract**

A method of determining a composition of a blended working fluid in a climate control system includes detecting a characteristic of a working fluid flowing through a fluid conduit at a location of the fluid conduit using a sensor; calculating a first concentration of a first refrigerant of the blended working fluid at the location; and calculating a second concentration of the second refrigerant of the blended working fluid at the location. The calculating the first concentration of the first refrigerant is based on the characteristic and stored information. The stored information includes a first stored value of the first refrigerant and a second stored value of a second refrigerant. The calculating the second concentration of the second refrigerant is based on the characteristic and the stored information. The calculating is based only upon the characteristic and the stored information.

## Description

### CROSS-REFERENCE TO RELATED APPLICATION

This application claims priority to U.S. Patent Application No. 19/078,684 filed on March 13, 2025, and U.S. Patent Application No. 19/546,271 filed on February 20, 2026, the entirety of each of which are incorporated herein by reference.

### FIELD

The present disclosure relates to climate control systems for use with working fluids having refrigerant blends exhibiting high glide and methods for detecting a concentration of each refrigerant in the refrigerant blend.

### BACKGROUND

This section provides background information related to the present disclosure which is not necessarily prior art.

A conventional thermodynamic climate control system such as, for example, a heat-pump system, a refrigeration system, or an air conditioning system, may include a fluid circuit having a first heat exchanger (*e.g.,* a condenser that facilitates a phase change of refrigerant from gas/vapor phase to a liquid) that is typically located outdoors or external to the environment to be cooled, a second heat exchanger (*e.g.,* an evaporator that facilitates a phase change of refrigerant from liquid to gas/vapor phase) that is typically located indoors or within the environment to be cooled, an expansion device disposed between the first and second heat exchangers, and a compressor that operates via a vapor compression cycle (VCC) to circulate and pressurize a gas/vapor phase refrigerant (and optional lubricant oil) between the first and second heat exchangers (*e.g.,* condenser and evaporator). The compressor is typically a mechanical compressor that serves to pressurize the refrigerant, which can be subsequently condensed and evaporated as it is circulated within the system to transfer heat into or out of the system.

Efficient and reliable operation of heating and cooling climate control systems can help to reduce energy consumption and potential greenhouse gas emissions associated with use and leakage of certain refrigerants. The heating, ventilation, air conditioning, and refrigeration (HVAC/R) industry has been searching for A1 (non-toxic and non-flammable) refrigerants, including blends with such A1 refrigerants, that have high cooling capacity per displacement, while desirably avoiding supercritical operation and sub-atmospheric pressures in order to enable low-cost compression and piping, while protecting the safety of the equipment operators and users. Thus, it would be desirable to employ climate control systems that can successfully employ such environmentally friendly refrigerants with low Global Warming Potential.

Some environmentally friendly refrigerants, such as high glide refrigerants include a blend of more than one refrigerant having different characteristics such as different boiling points, critical points, densities, etc. Accordingly, a working fluid including high glide refrigerants may vary in composition (*i.e.,* concentration of each of the refrigerants) as it moves through the climate control system. To improve efficiency of the climate control system, it is desirable to determine the composition of the working fluid during operation of the climate control system.

### SUMMARY

This section provides a general summary of the disclosure and is not a comprehensive disclosure of its full scope or all of its features.

In various aspects, the present disclosure provides a method of determining a composition of a blended working fluid in a climate control system. The method includes detecting a characteristic of a working fluid flowing through a fluid conduit at a location of the fluid conduit using a sensor. The method further includes determining a composition of the working fluid by calculating a first concentration of a first refrigerant of the blended working fluid at the location and calculating a second concentration of the second refrigerant of the blended working fluid at the location. The calculating the first concentration of the first refrigerant is based on the characteristic and stored information. The stored information includes a first stored value of the first refrigerant and a second stored value of a second refrigerant. The calculating the second concentration of the second refrigerant is based on the characteristic and the stored information. The calculating is based only upon the characteristic and the stored information.

In one aspect, the blended working fluid is a high glide refrigerant blend.

In one aspect, the sensor includes one of a temperature sensor, a pressure sensor, a capacitance sensor, a flow rate sensor, and an acoustic velocity sensor.

In one aspect, the sensor is disposed outside of the fluid conduit and is in fluid communication with the blended working fluid.

In one aspect, the sensor is disposed within the fluid conduit such that it is in fluid communication with the blended working fluid.

In one aspect, the sensor is disposed within a component of the climate control system. The component includes one of a separator vessel, a compressor, a liquid pump, a valve, a heat exchanger.

In one aspect, the first refrigerant has a first density and the second refrigerant has a second density that is different from the first density. The first stored value is the first density and the second stored value is the second density. The sensor is a pressure sensor that is configured to detect a pressure of the blended working fluid at the location in the fluid conduit. The characteristic includes the pressure.

In one aspect, the determining the composition includes calculating the first concentration based on the pressure, the first density and the second density. The determining the composition further includes calculating the second concentration based on the pressure, the first density and the second density.

In one aspect, prior to the detecting, the method includes heating a portion of the blended working fluid.

In one aspect, the first refrigerant has a first dielectric constant and the second refrigerant has a second dielectric constant that is different from the first dielectric constant. The first stored value is the first dielectric constant and the second stored value is the second dielectric constant. The sensor is a capacitance sensor that is configured to detect a capacitance of the working fluid in the fluid conduit. The characteristic is the capacitance.

In one aspect, the determining the composition includes calculating the first concentration based on the capacitance, the first dielectric constant, and the second dielectric constant. The determining the composition further includes calculating the second concentration based on the capacitance, the first dielectric constant, and the second dielectric constant.

In one aspect, the first refrigerant has a first liquid acoustic velocity and the second refrigerant has a second liquid acoustic velocity that is different from the first liquid acoustic velocity. The first stored value is the first liquid acoustic velocity and the second stored value is the second liquid acoustic velocity. The sensor is a liquid acoustic velocity sensor that is configured to detect an acoustic velocity of the working fluid in the fluid conduit. The characteristic is the acoustic velocity.

In one aspect the sensor includes an acoustic transmitter and an acoustic receiver downstream of the acoustic transmitter.

In one aspect, the determining the composition includes calculating the first concentration based on the acoustic velocity of the working fluid, the first liquid acoustic velocity, and the second liquid acoustic velocity. The determining the composition further includes calculating the second concentration based on the acoustic velocity, the first liquid acoustic velocity, and the second liquid acoustic velocity.

In one aspect, the method further includes modifying an operation of a component of the climate control system based on the composition.

In one aspect, the sensor is positioned between a liquid-to-suction heat exchanger and an expansion valve.

In one aspect, after the determining, the method further includes adding a quantity of (i) the first refrigerant, (ii) the second refrigerant, or both (i) and (ii) to the climate control system based on the composition.

In various aspects, the present disclosure provides a method of determining a composition of a blended working fluid in a climate control system. The method may include detecting a pressure of the blended working fluid in a separator vessel with a first sensor inside the separator vessel. The separator vessel may be configured to separate a first portion of the blended working fluid in a first phase and a second portion of the blended working fluid in a second phase. The method may further include detecting a temperature of the blended working fluid in the separator vessel with a second sensor inside the separator vessel. The method may further include detecting a first flow rate of the first portion of the working fluid. The first flow rate may be detected when the first portion of the working fluid flows through a compressor with a third sensor associated with the compressor. The compressor may be downstream of the separator vessel. The method may further include detecting a second flow rate of the second portion of the working fluid. The second flow rate may be detected when the second portion of the working fluid flows through a pump with a fourth sensor associated with the pump. The pump may be downstream of the separator vessel. The method may further include determining a composition of the blended working fluid by calculating a concentration of a first refrigerant based on the pressure, the temperature, the first flow rate, and the second flow rate. The determining the composition may further include calculating a concentration of a second refrigerant based on the pressure, the temperature, the first flow rate and the second flow rate.

In one aspect, the method further includes modifying operation of a component of the climate control system based on the composition.

In one aspect, the method further includes adding a quantity of (i) the first refrigerant, (ii) the second refrigerant, or both (i) and (ii) to the climate control system based on the composition.

Further areas of applicability will become apparent from the description provided herein. The description and specific examples in this summary are intended for purposes of illustration only and are not intended to limit the scope of the present disclosure.

### BRIEF DESCRIPTION OF DRAWINGS

The drawings described herein are for illustrative purposes only of selected embodiments and not all possible implementations and are not intended to limit the scope of the present disclosure.
FIG. 1 is a schematic of an example embodiment of a climate control system for circulating a working fluid having blended refrigerants that exhibit high glide according to various aspects of the present disclosure;
FIG. 2 is a pressure and enthalpy phase diagram illustrating principles of operation of the climate control system of FIG. 1 according to certain aspects of the present disclosure;
FIG. 3. is a block diagram of a control module of the system of FIG. 1 according to various aspects of the present disclosure;
FIG. 4 is a flowchart for an algorithm for a method of determining a composition of a blended working fluid in a climate control system according to various aspects of the present disclosure;
FIG. 5 is an example embodiment of a sensor for detecting a characteristic of a blended working fluid according to certain aspects of the present disclosure;
FIG. 6 is an example embodiment of another sensor for detecting a characteristic of a blended working fluid according to certain aspects of the present disclosure;
FIG. 7 is an example embodiment of another sensor for detecting a characteristic of a blended working fluid according to certain aspects of the present disclosure;
FIG. 8 is an example embodiment of a plurality of sensors for detecting a plurality of characteristic of a blended working fluid, a first portion of the working fluid, and a second portion of the working fluid according to certain aspects of the present disclosure;
FIG. 9 is a schematic of another example embodiment of a climate control system for circulating a working fluid having blended refrigerants that exhibit high glide and a liquid pump according to various aspects of the present disclosure;
FIG. 10 is a schematic of another example embodiment of a climate control system for circulating a working fluid having blended refrigerants that exhibit high glide, a liquid pump, and a pair of four-way valves according to various aspects of the present disclosure; and
FIG. 11 is a schematic of another example embodiment of a climate control system for circulating a working fluid having blended refrigerants that exhibit high glide, a liquid pump, an accumulator, a receiver, and at least one expansion valve.

Corresponding reference numerals indicate corresponding parts throughout the several views of the drawings.

### DETAILED DESCRIPTION

Example embodiments are provided so that this disclosure will be thorough, and will fully convey the scope to those who are skilled in the art. Numerous specific details are set forth such as examples of specific compositions, components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, elements, compositions, steps, integers, operations, and/or components, but do not preclude the presence or addition of one or more other features, integers, steps, operations, elements, components, and/or groups thereof. Although the open-ended term "comprising," is to be understood as a non-restrictive term used to describe and claim various embodiments set forth herein, in certain aspects, the term may alternatively be understood to instead be a more limiting and restrictive term, such as "consisting of" or "consisting essentially of." Thus, for any given embodiment reciting compositions, materials, components, elements, features, integers, operations, and/or process steps, the present disclosure also specifically includes embodiments consisting of, or consisting essentially of, such recited compositions, materials, components, elements, features, integers, operations, and/or process steps. In the case of "consisting of," the alternative embodiment excludes any additional compositions, materials, components, elements, features, integers, operations, and/or process steps, while in the case of "consisting essentially of," any additional compositions, materials, components, elements, features, integers, operations, and/or process steps that materially affect the basic and novel characteristics are excluded from such an embodiment, but any compositions, materials, components, elements, features, integers, operations, and/or process steps that do not materially affect the basic and novel characteristics can be included in the embodiment.

Any method steps, processes, and operations described herein are not to be construed as necessarily requiring their performance in the particular order discussed or illustrated, unless specifically identified as an order of performance. It is also to be understood that additional or alternative steps may be employed, unless otherwise indicated.

When a component, element, or layer is referred to as being "on," "engaged to," "connected to," or "coupled to" another element or layer, it may be directly on, engaged, connected or coupled to the other component, element, or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various steps, elements, components, regions, layers and/or sections, these steps, elements, components, regions, layers and/or sections should not be limited by these terms, unless otherwise indicated. These terms may be only used to distinguish one step, element, component, region, layer or section from another step, element, component, region, layer or section. Terms such as "first," "second," and other numerical terms when used herein do not imply a sequence or order unless clearly indicated by the context. Thus, a first step, element, component, region, layer or section discussed below could be termed a second step, element, component, region, layer or section without departing from the teachings of the example embodiments.

Spatially or temporally relative terms, such as "before," "after," "inner," "outer," "beneath," "below," "lower," "above," "upper," and the like, may be used herein for ease of description to describe one element or feature's relationship to another element(s) or feature(s) as illustrated in the figures. Spatially or temporally relative terms may be intended to encompass different orientations of the device or system in use or operation in addition to the orientation depicted in the figures.

Throughout this disclosure, the numerical values represent approximate measures or limits to ranges to encompass minor deviations from the given values and embodiments having about the value mentioned as well as those having exactly the value mentioned. Other than in the working examples provided at the end of the detailed description, all numerical values of parameters (*e.g.,* of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. For example, "about" may comprise a variation of less than or equal to 5%, optionally less than or equal to 4%, optionally less than or equal to 3%, optionally less than or equal to 2%, optionally less than or equal to 1%, optionally less than or equal to 0.5%, and in certain aspects, optionally less than or equal to 0.1%.

In addition, disclosure of ranges includes disclosure of all values and further divided ranges within the entire range, including endpoints and sub-ranges given for the ranges.

Example embodiments will now be described more fully with reference to the accompanying drawings.

### High Glide Refrigerant Blends

In various aspects, the present disclosure pertains to climate control systems and methods of operating such systems that facilitate the use of working fluids including refrigerant blends. The refrigerant blends may include environmentally friendly refrigerants (for example, including one or more A1 refrigerants) that also exhibit high and/or extreme glide during operation. Climate control systems equipped with high and/or extreme glide refrigerants can advantageously be capacity modulated. In certain aspects of the present disclosure, a working fluid composition for a refrigeration system for a heat transfer device, such as a compressor machine, includes a blend of at least two refrigerants. The working fluid can be modified in operation by further adding a lubricant, such as a lubricant having preferential affinity to at least one refrigerant so as to change the refrigerant blend concentration in circulation in the system. In the context of the present disclosure, the working fluid may comprise at least two distinct refrigerants that form a blend of refrigerant compositions (also referred to as a "blended refrigerant").

Certain refrigerant blends may be prone to fractionation and high glide, which traditionally have been considered problems to be avoided in climate control systems. Many refrigerant blends exhibit temperature glide when they undergo phase changes in both the evaporator and condenser. As noted above, in the evaporator, the refrigerant evaporates or undergoes a phase change from a liquid to a vapor. In the condenser, the refrigerant condenses or undergoes a phase change from a vapor to a liquid. Refrigerant blends exhibit temperature glide, because there are multiple refrigerant molecules present with different properties. As these refrigerant blends change phase (i.e., evaporate and condense), a change in the refrigerant blend composition is observed due to preferential evaporation or condensation of the more or less volatile refrigerant components (also referred to as high-pressure and low-pressure refrigerants) in the blend of the refrigerants. This process is referred to as blend fractionation.

Thus, a total temperature glide of a refrigerant blend may be defined as a difference in temperature between a saturated vapor temperature and a saturated liquid temperature at a constant pressure. Stated in another way, glide may be considered to be a temperature difference between the starting and ending temperature of a refrigerant phase change within a system at a constant pressure.

In the context of certain aspects of the present technology, counterintuitively, a working fluid is intentionally selected that has a high glide refrigerant blend. In certain aspects, the refrigerant blend may comprise a first refrigerant and a second refrigerant. The first refrigerant and the second refrigerant may be chosen for various properties, including respective normal boiling points, glide efficiency, global warming potential, environmental impact (e.g., polyfluoroalkyl substances (PFAS) impact), capacity, pressure, safety, and the like. By way of example, the present disclosure contemplates employing refrigerant blends comprising at least one refrigerant that has a low global warming potential, such as ASHRAE classified A1 and A2L refrigerants.

In certain aspects, the first refrigerant may have a relatively low normal boiling point (also referred to herein as a high-pressure refrigerant) and the second refrigerant may have a relatively high normal boiling point (also referred to herein as a low-pressure refrigerant). In certain aspects, the first refrigerant may have a first (low) boiling point of greater than or equal to about -270°C (*e.g*., greater than or equal to about -250°C, greater than or equal to about -225°C, greater than or equal to about -200°C, greater than or equal to about -175°C, greater than or equal to about -150°C, greater than or equal to about -125°C, greater than or equal to about -100°C, greater than or equal to about -75°C, greater than or equal to about -50°C, greater than or equal to about -25°C, or greater than or equal to about 0°C) to less than or equal to about 8°C (e.g., less than or equal to about 0°C, less than or equal to about -25°C, less than or equal to about -50°C, less than or equal to about -75°C, less than or equal to about -100°C, less than or equal to about -125°C, less than or equal to about -150°C, less than or equal to about -175°C, less than or equal to about -200°C, less than or equal to about -225°C, or less than or equal to about -250°C). Thus, the low boiling point refrigerant may have a boiling point in a range from hydrogen at -267°C to R1336mzz(E) at 7.5°C. In certain aspects, the second refrigerant may have a second (high) boiling point of greater than or equal to about -55°C (e.g., greater than or equal to about -50°C, greater than or equal to about -25°C, greater than or equal to about 0°C, greater than or equal to about 25°C, greater than or equal to about 50°C, or greater than or equal to about 75°C) to less than or equal to about 100°C (*e.g.,* less than or equal to about 75°C, less than or equal to about 50°C, less than or equal to about 25°C, less than or equal to about 0°C, less than or equal to about -25°C, or less than or equal to about 50°C). For example, the high boiling point refrigerant can range from R32 at approximately -52°C to water (H₂O) at 100°C. As will be appreciated by those of skill in the art, the refrigerant components are selected to create a blend that meets the goals of the system in the application. A different blend may be selected for cryogenic applications, low temperature refrigeration, medium temperature refrigeration, air conditioning, and different process cooling applications, and the like.

Thus, the working fluid may comprise the first refrigerant and the second refrigerant having a difference in normal boiling points (e.g., ΔT = First Refrigerant Boiling Point (BP₁) - Second Refrigerant Boiling Point (BP₂)) of greater than or equal to about 10°F (about 5°C), greater than or equal to about 15°F (about 8°C), greater than or equal to about 20°F (about 11°C), greater than or equal to about 25°F (about 14°C), or greater than or equal to about 30°F at atmospheric pressure (about 17°C). In certain aspects, the difference in normal boiling points between the first refrigerant and the second refrigerant is greater than or equal to about 50°F (about 28°C), greater than or equal to about 75°F (about 42°C), greater than or equal to about 100°F (about 55°C), greater than or equal to about 125°F (about 69°C), or greater than or equal to about 150°F (about 83°C) at atmospheric pressure.

### Climate Control System

A thermodynamic climate control system for example, a heat pump system, a refrigeration system, and/or an air conditioning system configured to use a high glide refrigerant blend is contemplated by certain aspects of the present disclosure. In various aspects, the present disclosure pertains to climate control systems used in a wide variety of refrigeration and heat energy transfer applications, in some cases, to industrial or commercial air-conditioning or refrigeration units, for example, for factories, office buildings, apartment buildings, warehouses, and ice-skating rinks, or for retail sale.

In various aspects, an amount of each refrigerant present in each phase of a high glide refrigerant blend (also referred to herein as a "refrigerant blend" or "working fluid") may vary at different points in a thermodynamic control system (also referred to herein as a "refrigerant system" or a "climate control system") and may be based on particular system requirements. Specifically, an amount or concentration of each of the first refrigerant and the second refrigerant in the refrigerant blend (*i.e.,* the relative proportion of the first refrigerant and the second refrigerant in the refrigerant blend) may be varied within the refrigeration system over time. In various aspects, the present disclosure is directed to a climate control system including one or more controllers that can calculate and/or determine a composition of the refrigerant blend using data from sensors and/or detection systems. In other words, one or more controllers determine the amount of each refrigerant in the refrigerant blend at different points of the system. Moreover, the controllers may control the operation of the climate control system based on a composition of the refrigerant blend determined at pre-determined locations in the climate control system. A climate control system including controllers, sensors and/or detection systems may be more efficient and have better tunability as compared to climate control systems that are free of controllers, sensors, and/or detection systems that cooperate to provide information on refrigerant composition.

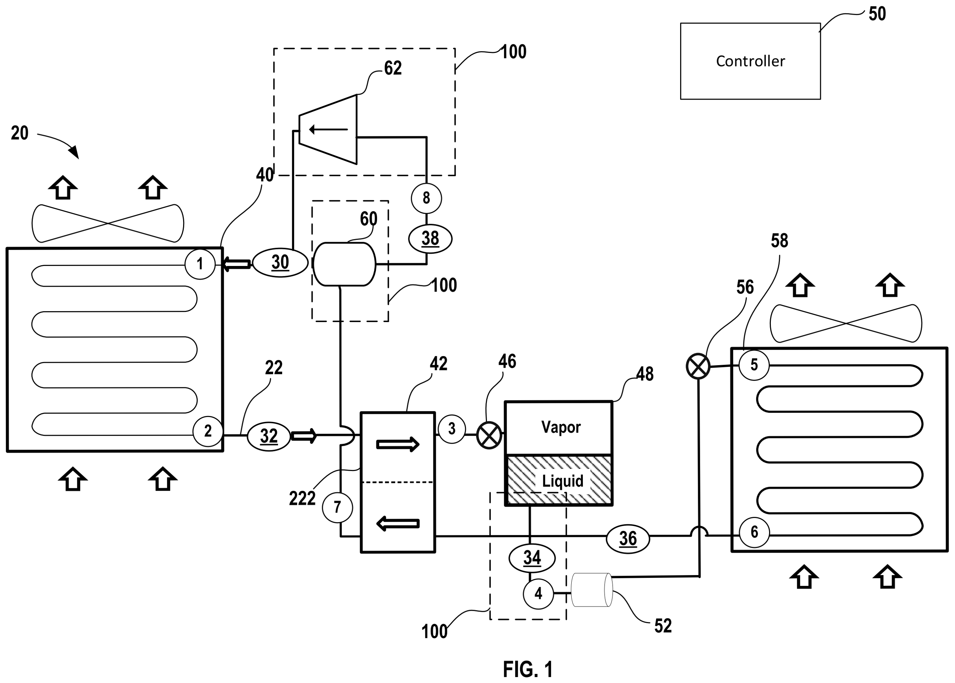

By way of example, FIG. 1 shows a schematic of an example of a simplified climate control system 20, such as a refrigeration system, that processes and circulates a working fluid or blended refrigerant having a composition comprising at least a first refrigerant (A) and a second refrigerant (B) that exhibit high glide. The capacity of the climate control system 20 may be modulated by changing relative proportions of first refrigerant (A) and second refrigerant (B) in the working fluid blend at different points in the system.

As discussed above, the blended refrigerant includes two or more refrigerants (i.e., a first refrigerant (A) and a second refrigerant (B)). A difference in boiling points between the first refrigerant (A) and the second refrigerant (B) may be greater than or equal to about 10°F at atmospheric pressure. The working fluid may also include oil(s) at certain points in the system, as will be described in greater detail below. The term "fluid" as used herein encompasses liquid, gas, and combinations thereof, including vapor (*e.g.,* a gas phase having aerosolized liquid droplets). The terms "gas" or "gas phase" as used herein are intended to encompass both vapor and pure gas phases.

The climate control system 20 has a fluid flow path or fluid conduit 22 that establishes fluid communication between the various components, so that the working fluid may circulate in a loop as discussed further herein. First, the working fluid including the first refrigerant (A) and second refrigerant (B) may enter a first heat exchanger at Point 1. The first heat exchanger may a condenser 40. The condenser 40 receives and cools working fluid in a pressurized gas stream 30 to generate a condensed working fluid stream 32. In the condenser 40, the working fluid in the pressurized gas stream 30 transforms from a vapor phase to a liquid phase. The working fluid is cooled by condensing that expels heat from the climate control system 20, as shown by the arrows reflecting airflow. The condenser 40 may be located in a room and/or space where heat may be expelled, for example, outdoors.

The heat exchangers (condenser 40 and evaporator 58 discussed below) may include concentric, finned tube, brazed plate, plate and frame, microchannel, or other heat exchangers. The system 20 may include a single condenser and evaporator or multiple condensers and evaporators in parallel or series configurations. Refrigerant flow therein can be controlled via a capillary tube, thermostatic expansion valve, electric expansion valve, or other methods. In heat pump systems, the roles of the condenser 40 and the evaporator 58 may be changed based on whether heating or cooling of a space is being performed.

In at least one aspect of the present technology, the working fluid including blended first refrigerant (A) and second refrigerant (B) may be only partially condensed to form a multiphase mixture of both liquid and optionally gas/vapor in the condensed working fluid stream 32. The working fluid exiting the condenser 40 at Point 2 may thus comprise both first refrigerant (A) and second refrigerant (B) that are partially or fully in liquid phase. In other words, working fluid at Point 2 and in condensed working fluid stream 32 may be a multiphase composition.

The working fluid condensate at Point 2 is then circulated in fluid conduit 22. The working fluid exiting the condenser 40 at Point 2 may then enter a liquid-to-suction heat exchanger 42. Generally, the liquid-to-suction heat exchanger 42 transfers heat between the relatively hot condensate fluid exiting the condenser 40 and relatively cold fluid exiting an evaporator 58. The liquid-to-suction heat exchanger 42 may further cool the liquid refrigerant prior to it entering an expansion valve 46.

After circulating through the liquid-to-suction heat exchanger 42, at Point 3 the working fluid is directed to the downstream expansion valve 46, where a pressure of the working fluid is decreased. After passing though the expansion valve 46, low-pressure working fluid is directed towards an inlet of a gas-liquid/liquid-vapor separating vessel or flash tank 48.

At Point 3 in the fluid conduit 22, the working fluid comprises a combination of both first refrigerant (A) and second refrigerant (B) that are partially or fully in liquid phase. As noted above, one aspect of the present technology is that the working fluid having the refrigerant blend with first refrigerant (A) and second refrigerant (B) is only partially condensed to form a mixture of both gas/vapor and liquid. For example, the first refrigerant (A) may have a lower boiling point and is thus more volatile, so a lower amount of first refrigerant (A) condenses to liquid phase, while second refrigerant (B) has a higher boiling point and thus a higher proportion of second refrigerant (B) condenses to liquid phase. Thus, at Point 3 a larger proportion of first refrigerant (A) may be in gas or vapor form and a larger proportion of second refrigerant (B) may be in liquid form.

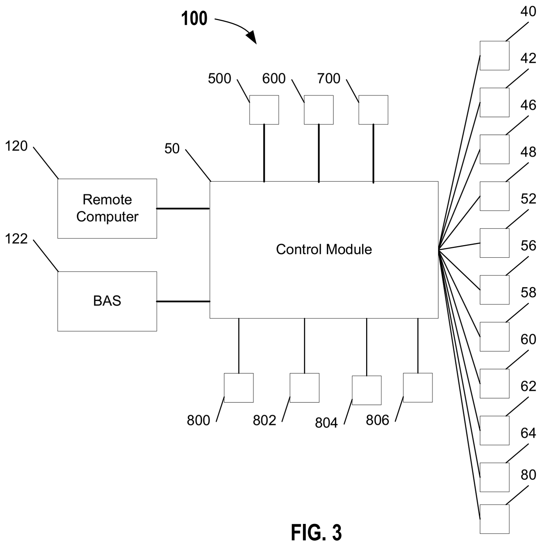

The presence of gas-liquid separator (e.g., flash tank) 48 in the climate control system 20 provides an ability to control or modulate how much of each refrigerant in the refrigerant blend is being directed to downstream components of the climate control system 20. By way of example, the quality or concentration (e.g., volume percent) of the first refrigerant (A) and second refrigerant (B) of the working fluid at Point 4 that exits the flash tank 48 may be controlled by a control module or controller 50. The control module 50 is described in greater detail below in the discussion accompanying FIG. 3.

When at least a portion of the working fluid in conduit 22 at Point 3 includes multiphase working fluid, the working fluid passes into the flash tank 48. The flash tank 48 receives the multiphase working fluid and generates a liquid stream 34. Thus, the multiphase working fluid is separated into a first or vapor portion that accumulates in the flash tank 48 and a second or liquid portion that exits the flash tank 48 at Point 4 as the distinct liquid stream 34. The vapor portion may include gas or vapor refrigerants, including more volatile first refrigerant (A) and a portion of the less volatile second refrigerant (B). The liquid stream 34 may comprise first refrigerant (A) and second refrigerant (B) in a liquid phase. In certain variations, a majority of the liquid stream 34 may be second refrigerant (B).

The liquid stream 34 exiting the flash tank 48 passes through a filter 52 and is directed to an expansion valve 56, where a pressure of the working fluid is further decreased. After passing though the expansion valve 56, low-pressure working fluid is directed towards an inlet of a second heat exchanger, such as the evaporator 58 at Point 5. The evaporator 58 heats the first refrigerant (A) and/or the second refrigerant (B) from a multiphase or liquid phase to a gas or vapor phase as it exits the evaporator 58 at Point 6, where the cooling effect of endothermic energy adsorption occurs.

The evaporator 58 may be located in a room or space to be cooled by the climate control system 20 or used to cool air flowing into a room or space in which cooling is desired. Thus, the evaporator 58 receives and at least partially vaporizes the low-pressure multiphase working fluid at Point 6 to generate an evaporated working fluid stream 36. The evaporated working fluid stream 36 is directed downstream to the liquid-to-suction heat exchanger 42.

After circulating through the liquid-to-suction heat exchanger 42, at Point 7 the working fluid is directed to a downstream accumulator 60 or other storage vessel or device. The accumulator 60 is optionally disposed in the fluid conduit 22 upstream of the evaporator 58. The accumulator 60 separates the liquid that has a relatively higher concentration of the refrigerant (A) from the vapor that has a relatively lower concentration of the refrigerant (A).

The vapor portion of the working fluid in the accumulator 60 passes as a vapor stream 38 into a compressor 62 at Point 8. In the compressor 62, fluid from the vapor stream 38 is compressed to increase pressure and form the high-pressure vapor or gas stream 30 exiting the compressor 62. The compressor 62 may be a variety of different compressors known in the art. Types of compressors useful for the above application can be classified into two broad categories, both positive displacement and dynamic compressors. Positive displacement compressors increase refrigerant vapor pressure by reducing the volume of the compression chamber through work applied to the compressor's mechanism. Positive displacement compressors include many styles of compressors currently in use, such as reciprocating, rotary (rolling piston, rotary vane, single screw, twin screw), and orbital (scroll or trochoidal). Dynamic compressors increase refrigerant vapor pressure by continuous transfer of kinetic energy to the vapor in a compression mechanism in the form of a rotating member, followed by conversion of this energy into a pressure rise. Centrifugal compressors function based on these principles. Details of the design and function of these compressors for refrigeration applications can be found in the 2010 ASHRAE Handbook, HVAC systems and Equipment, Chapter 37, incorporated herein by reference. In certain variations, the compressor 62 may be a scroll compressor or a reciprocating compressor, by way of example.

The high-pressure or pressurized gas stream 30 exiting the compressor 62 has a pressure that is significantly greater than the pressure of the evaporated working fluid stream 36 and vapor stream 38. The mechanical energy required for compressing the vapor and pumping the fluid in the compression mechanism of the compressor 62 is provided by, for example, an electric motor or internal combustion engine. Notably, in certain aspects, the climate control system 20 provides a turndown without requiring traditional compressor modulation techniques by changing a density of the refrigerants in the working fluid at the inlet of the compressor 62.

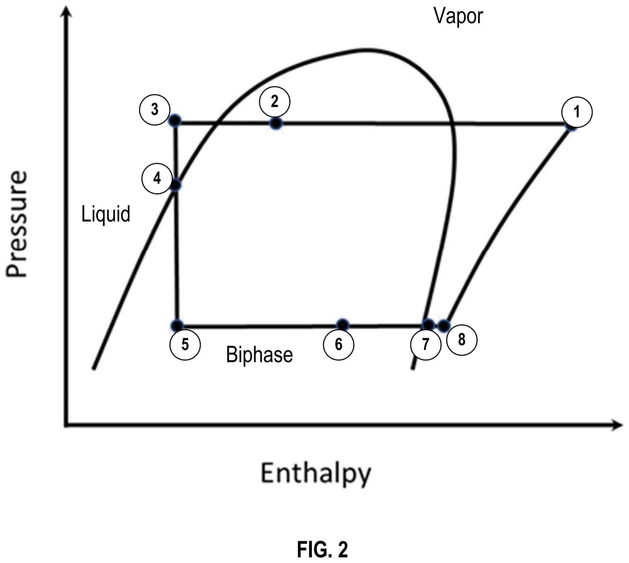

FIG. 2 shows a pressure versus enthalpy phase diagram for constant temperatures illustrating certain principles of the working fluids including refrigerant blends having high glide according to certain principles of the present disclosure. Notably, the state points described herein with respect to FIG. 2 are also shown in the system of FIG. 1. In the example embodiment of FIG. 2, the working fluid is a refrigerant blend comprising carbon dioxide and R1233zde. While these specific refrigerants are provided by way of example, other refrigerant blends according to the present disclosure may also be used in the climate control system 20 of FIG. 1.

With reference to FIGS. 1-2, Point 1 shows vapor as it exits the compressor 62, where the vapor has the highest pressure and enthalpy than at any other point in the climate control system 20. As the working fluid with the refrigerant blend enters and passes through the condenser 40 at Point 2, the working fluid comprising the refrigerants releases heat and thereby loses enthalpy, while maintaining pressure, as it exits the condenser 40. Where the refrigerants are only partially condensed, Point 2 falls inside the biphasic (vapor and liquid) operating envelope, rather than in the liquid phase region as in traditional systems.

Thus, heat/enthalpy is removed from the two-phase fluid in the condenser 40 to form a lower vapor-quality two-phase working fluid, to either a saturated liquid or a subcooled liquid. The working fluid passes liquid-to-suction heat exchanger 42 at Point 3 and may be cooled by heat exchange with working fluid leaving the evaporator 58 to form a saturated liquid or subcooled state working fluid.

At Point 4, the pressure of the fluid that has been condensed and potentially subcooled at Point 3 is reduced by expanding the fluid as it passes through a valve or orifice (*e.g.,* the expansion valve 46) so that it has a lower pressure at the same enthalpy. The low-pressure liquid or low vapor-quality (*e.g.,* having lower vapor/gas and greater amounts of liquid) working fluid after the expansion (Point 4) thus absorbs heat from a stream of air or secondary fluid in an evaporator 58 to form a two-phase working fluid corresponding to Point 5. The refrigerant blend enters the evaporator at Point 5, where heat is absorbed and enthalpy increased so that the refrigerants are at least partially or fully vaporized to reach Point 6. Where the refrigerants are only partially evaporated, the points are inside the biphasic (vapor and liquid) envelope.

The two-phase working fluid leaving the evaporator at Point 6 is further heated by a fluid leaving the condenser 40 via heat exchange at Point 7 to become a two-phase working fluid of a higher vapor-quality (e.g., having relatively greater amounts of vapor/gas). At Point 8 the working fluid enters the compressor 62 and the pressure of the vapor is increased to a higher pressure to a discharge state at Point 1.

FIG. 3 is a block diagram illustrating communication between the control module 50 (also referred to as the "controller 50") and components of the climate control system 20 of FIG. 1 according to at least one example embodiment.

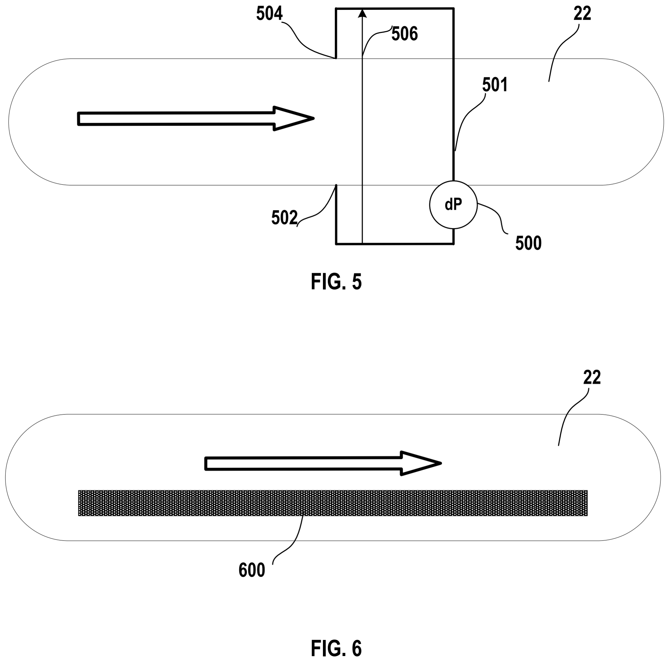

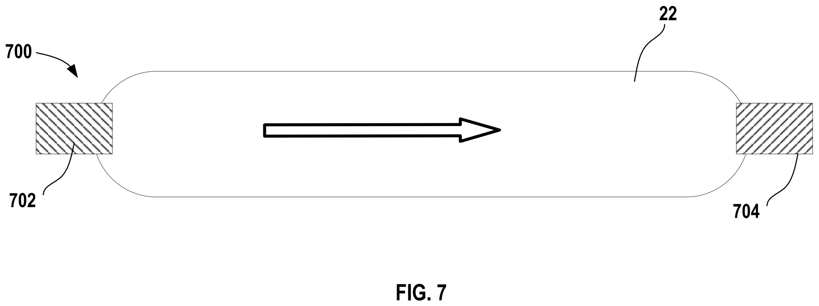

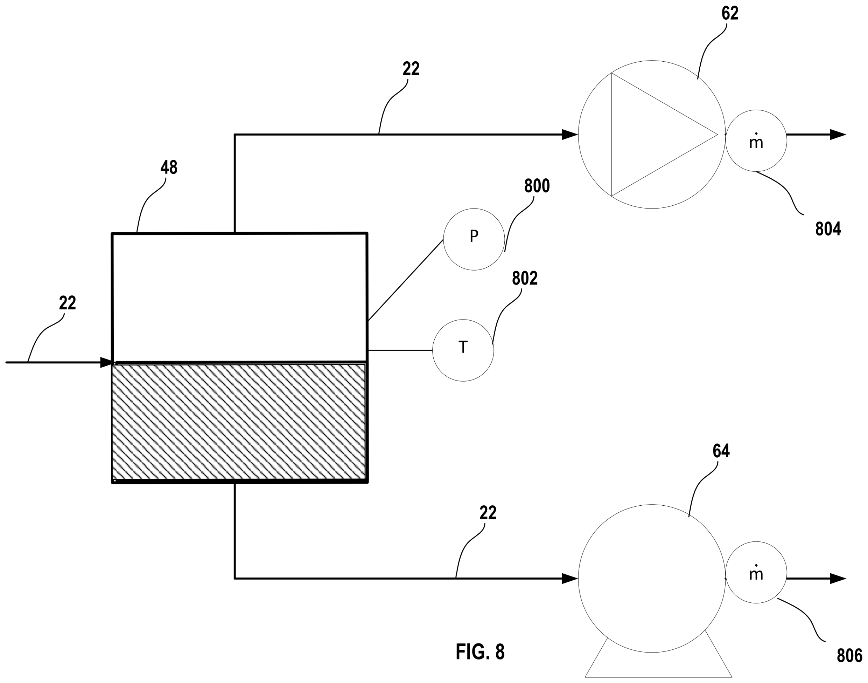

In various aspects, the control module 50 can be used to activate, deactivate, or modulate operation of various components and devices in the climate control system 20, including compressor(s), fan(s), pump(s), valve(s), storage vessel(s), and the like. The control module 50 may receive input from various sensors 100 in the climate control system 20, such as temperature sensors, pressure sensors, capacitance sensors, flow rate sensors (e.g., volumetric flow rate sensors), acoustic velocity sensors (e.g., sonic velocity sensors), current and voltage meters, etc. In the example of FIG. 3, the control module 50 may receive input from a pressure sensor 500 (e.g., the sensor 500 of FIG. 5), a capacitance sensor 600 (e.g., the sensor 600 of FIG. 6), an acoustic velocity sensor 700 (e.g., the sensor 700 of FIG. 7), a pressure sensor 800 (e.g., the first sensor 800 of FIG. 8), a temperature sensor 802 (e.g., the second sensor 802 of FIG. 8), a flow rate sensor 804 (e.g., the third sensor 804 of FIG. 8), and/or a flow rate sensor 806 (*e.g.,* the fourth sensor 806 of FIG. 8) The sensors 100 will be described in greater detail below in the discussion accompanying FIGS. 5-8.

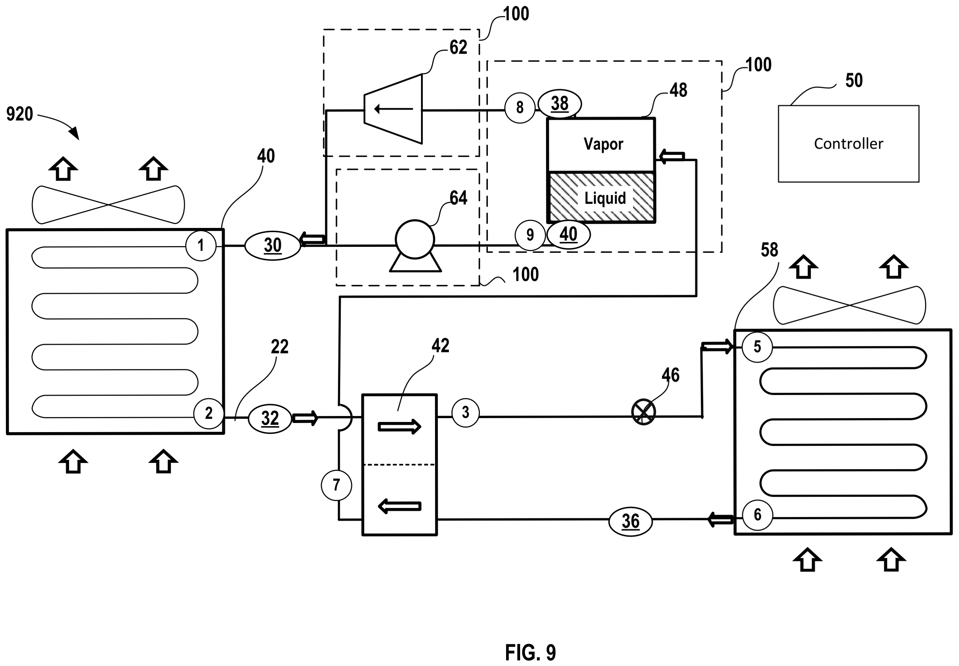

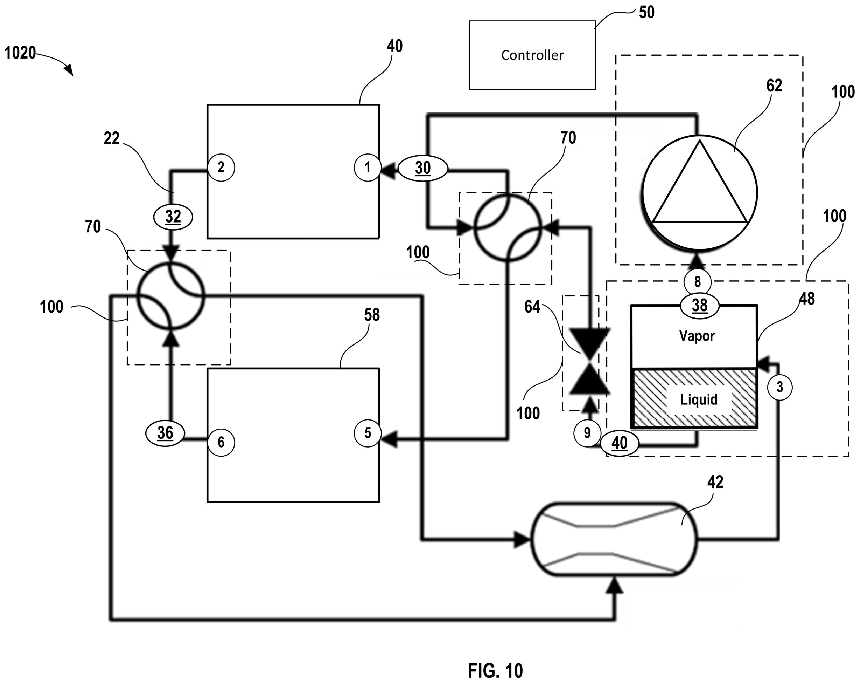

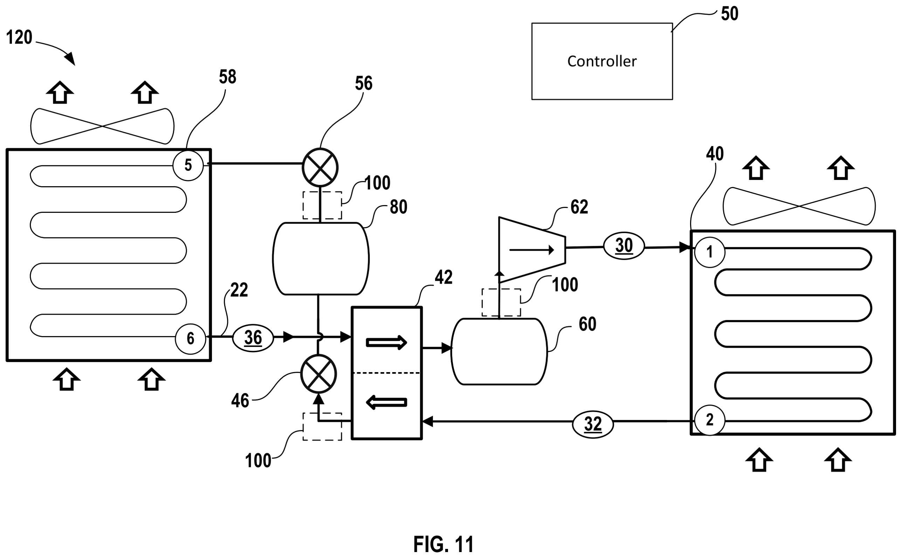

Thus, the control module 50 may open, close, regulate, or direct working fluid flow (or portions of working fluid flow, such as first refrigerant and/or second refrigerant) into and out of various components and devices in the system via the fluid conduits 22, including in the condenser 40, heat exchanger 42, expansion valves 46, gas-liquid separator 48, filter 52, expansion valve 56, evaporator 58, accumulator 60, compressor 62, storage vessels (*see, e.g.,* receiver 80 of FIG. 11), liquid pumps (*see, e.g.,* liquid pump 64 of FIGS. 9 and 10), and the like. It follows that while only one control module 50 is shown in the example embodiment of FIG. 1, any number of control modules 50 receiving data from any number of sensors 100 may be utilized to achieve the desired fluid flow characteristics of the climate control system 20. It should be appreciated that other quantities, types, or combinations of sensors 100 may be utilized.

In at least one example embodiment, the control module 50 is in communication with a remote computer 120 so that a remote user can monitor, control, and/or adjust operation of the control module 50.

In at least one example embodiment, the control module 50 may be in communication with a building automation system (BAS) 122. The BAS 122 may be connected to additional temperature and pressure sensors and may monitor and store additional temperature and pressure data that can be accessed by the control module 50 in the event of a sensor failure. The remote computer 120 can also be connected to the BAS 122 so that a remote user can log into the BAS 122 and monitor, control, or adjust operation of any of the controllers, including the control module 50.

As discussed above, in various aspects, the control of the climate control systems (e.g., the climate control system 20 of FIG. 1, control system 920 of FIG. 9, and/or control system 1020 of FIG. 10), including control of the amount or volume of working fluid circulating through the various components above may be achieved by one or more control modules (*e.g.,* by control module 50). In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The control module 50 may include one or more interface circuits. In some examples, the interface circuits may include wired or wireless interfaces that are connected to a local area network (LAN), the Internet, a wide area network (WAN), or combinations thereof. The functionality of any given control module 50 of the present disclosure may be distributed among multiple control modules 50 that are connected via interface circuits. For example, multiple control modules 50 may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer (e.g., the remote computer 120) created by configuring a general-purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, Javascript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

The control module 50 can include one or more modules 50 and can be implemented as part of a control board, furnace board, thermostat, air handler board, contactor, or other form of control system or diagnostic system. The control module 50 can contain power conditioning circuitry to supply power to various components using 24 Volts (V) alternating current (AC), 120V to 240V AC, 5V direct current (DC) power, etc. The control module 50 can include bidirectional communication which can be wired, wireless, or both whereby system debugging, programming, updating, monitoring, parameter value/state transmission etc. can occur.

In various aspects, the sensors 100 measure characteristics (e.g., pressure, temperature, dielectric constant, density, acoustic velocity (e.g., sonic velocity), etc.) of the working fluid at pre-determined specific locations in the fluid conduit 22. The control module 50 receives the measurement from the one or more sensors 100. The control module 50 then can determine necessary modifications to the climate control system 20. For example, the control module 50 may determine a concentration or composition of the working fluid at any given location in the climate control system 20. Specifically, the control module 50 may receive measurements of working fluid characteristics of the first refrigerant (A) and the second refrigerant (B) and calculate a first concentration of the first refrigerant and a second concentration of the second refrigerant as a function of the working fluid characteristics. The control module 50 may then control an operation of the climate control system 20, such as an operation of the condenser 40, heat exchanger 42, expansion valve 46, gas-liquid separator 48, filter 52, expansion valve 56, evaporator 58, accumulator 60, compressor 62, storage vessels (not shown), liquid pumps *(see, e.g.,* liquid pump 64 of FIGS. 9 and 10) based on the determined composition. For example, the control module 50 may open and close valves to modulate the flow of the working fluid through the climate control system 20 or otherwise modify the composition of the blended working fluid (*e.g.,* by adding a quantity of the first refrigerant (A) and/or the second refrigerant (B) at the specific location). In another example, the control module 50 may compare the determined composition of the working fluid to a stored threshold (*e.g.,* designed-to value) and may provide signals or instructions to one or more components of the climate control system 20 to modify its operation based on the determined concentration.

In various aspects, the present disclosure relates to a control algorithm or method for detecting a composition of refrigerant in a working fluid. For example, the method may include detecting a concentration of a first refrigerant (A) and a second refrigerant (B) and determining the composition of the working fluid.

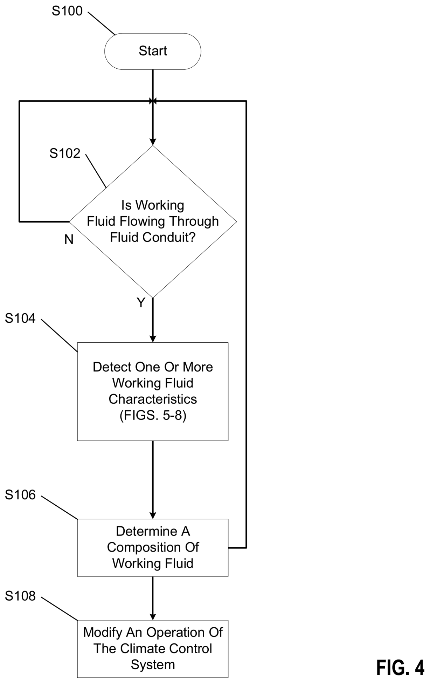

FIG. 4 is a flowchart illustrating a control algorithm for determining a composition of refrigerant in a working fluid of the climate control system 20 of FIG. 1 according to at least one example embodiment.

The control algorithm begins at S100. The control algorithm may begin automatically or in response to receiving an instruction.

At S102, the control algorithm, using the control module 50, determines whether working fluid is flowing through the fluid conduit 22. If working fluid is not flowing through the fluid conduit 22, then the method returns to S102. If working fluid is flowing through the fluid conduit 22, then the method continues to S104.

At S104, the control algorithm detects one or more characteristics of the working fluid by receiving data from one or more of the sensors. As will be described in greater detail below in the discussion accompanying FIGS. 5-8, the one or more sensors 100 are configured to detect or measure a characteristic of the working fluid as it flows through the fluid conduit 22. The method continues at S106.

At S106, the control algorithm calculates or determines a composition of the working fluid. The calculation may include calculating a first concentration of the first refrigerant (A) and a second concentration of the second refrigerant (B) based on the characteristic(s) detected in S104 and stored information in a memory of the climate control system 20.

The stored information on a memory of the system 20 may include values, tables, graphs, formulas, and/or presence or absence of refrigerant characteristics. The memory may include information for a plurality of different refrigerants. In at least some example embodiments, stored information includes a plurality of stored values. The plurality of stored values may include a first value associated with the first refrigerant (A) and a second value associated with the second refrigerant (B). For example, the values may include mass, density at various conditions, dielectric constant, and/or liquid acoustic and/or sonic velocity of the first refrigerant (A) and the second refrigerant (B). The values may be independent of other refrigerant and/or system information. Additionally or alternatively, the values may be dependent upon other refrigerant and/or system information (e.g., temperature at a point in the system). In this case, the values may be determined by the control module 50 using tables, graphs, and/or formulas. The other refrigerant and/or system information may come from other measurements (e.g., by sensors), system setpoints, and/or system assumptions.

In certain aspects, after determining the composition of the working fluid at S106, the control algorithm returns to S102. Additionally or alternately, as discussed below, after determining the composition of the working fluid at S106, the control algorithm may optionally modify an operation of the control system 20 at S108. In certain other aspects, after determining the composition of the working fluid at S104, the control algorithm ends.

At S108, the control algorithm may modify an operation of a component of climate control system 20, such as the condenser 40, heat exchanger 42, expansion valve 46, gas-liquid separator 48, filter 52, expansion valve 56, evaporator 58, accumulator 60, compressor 62, storage vessels (*see, e.g.,* receiver 80 of FIG. 11), liquid pumps (*see, e.g.,* liquid pump 64 of FIGS. 9 and 10) based on the calculated composition. In one example, the determined composition is provided to the control module 50, which controls one or more components of the climate control system 20 based on the determined composition, such that the one or more component modifies an operation based on the composition (*e.g.,* starts, stops, pauses an operation of one or more component of the climate control system 20). In another example, the control algorithm adds a quantity of the first refrigerant (A) and/or the second refrigerant (B) to achieve a predetermined (or alternately, desired) target composition (*e.g.,* a target composition of the blended working fluid at the specific location).

As discussed above, in various aspects, the sensors 100 measure or detect characteristics (*e.g.,* pressure, temperature, dielectric constant, density, acoustic velocity, etc.) of the working fluid at pre-determined or desired specific locations in the fluid conduit 22. As used herein, "detecting" relates to information output by sensor. Characteristics may be detected directly or indirectly by one or more sensors 100. In other words, an output of each of the sensors 100 may be based on a detected characteristic of the working fluid. The detected characteristic may be selected from the group consisting of: pressure, temperature, dielectric constant, density, acoustic velocity (e.g., sonic velocity), and combinations thereof.

The sensors 100 may be positioned in various locations on the fluid conduit 22 that are suitable to measure a characteristic of the working fluid. For example, when the control module 50 is associated with the gas-liquid separator 48, the sensor 100 may be positioned immediately upstream and/or immediately downstream of the gas-liquid separator 48. Additionally or alternately, when the control module 50 is associated with the accumulator 60, the sensor 100 may be positioned immediately upstream and/or immediately downstream of the accumulator 60. Additionally or alternately, when the control module 50 is associated with the compressor 62, the sensor 100 may be positioned immediately upstream and/or immediately downstream of the compressor 62. Additionally or alternately, when the control module 50 is associated with a liquid pump *(see, e.g.,* liquid pump 64 of FIGS. 9 and 10), the sensor 100 may be positioned immediately upstream, and/or immediately downstream of the liquid pump. In certain aspects, one or more sensors may be integrated into the component, such as integrated in the gas-liquid separator 48, accumulator 60, compressor 62, the fluid conduit 22, and/or liquid pump 64.

In certain aspects, the sensor 100 is positioned outside of the fluid flow path (i.e., disposed external to the fluid conduit 22) *(see, e.g.,* sensor 500 of FIG. 5). In certain aspects, the sensor may be positioned within the fluid flow path (i.e., disposed in the fluid conduit 22) *(see, e.g.,* sensor 600 of FIG. 6 and sensor 700 of FIG. 7). In certain aspects, the sensor 100 is positioned inside of a storage container, such as inside of the gas-liquid separator 48 and/or accumulator 60 *(see, e.g.,* sensors 800, 802 of FIG. 8).

In various aspects, calculating a composition of a working fluid may be based on a detected characteristic and stored information. The stored information includes a first stored value and a second stored value. In some embodiments, the detected characteristic includes three or fewer detected characteristics (e.g., three detected characteristics, two detected characteristics or one characteristic). In some embodiments, the control module 50 is configured to determine a composition of the working fluid utilizing a single point of measurement (*see, e.g.,* FIGS. 5-7). In other words, the control module 50 may determine or calculate a composition of the working fluid based on a single detected characteristic (i.e., measurement) from a sensor. In some embodiments, the single detected characteristic is one of a pressure (*e.g.,* when the sensor 100 is the pressure sensor 500), a capacitance (*e.g.,* when the sensor 100 is the capacitance sensor 600), or an acoustic velocity (*e.g.,* when the sensor 100 is the acoustic velocity sensor 700). In some embodiments, the composition of the working fluid is calculated from a single detected characteristic independently of other detected characteristics (*e.g.,* measurements from other sensors included in the climate control system 20).

FIG. 5 shows a schematic of an example of the sensor 500 in communication with the control module 50 (shown in FIG. 3). In other words, the control module 50 receives data from the sensor 500. The sensor 500 is a pressure sensor. The sensor 500 may be attached to a pipe 501 extending between a fluid inlet 502 and a fluid outlet 504. The fluid inlet 502 and the fluid outlet 504 are in fluid communication with the fluid conduit 22. A portion of working fluid flowing through the fluid conduit 22 may enter the pipe 501 at the fluid inlet 502, flow through the pipe 501, and return to the fluid conduit after exiting the fluid outlet 504. In certain aspects, the pipe 501 is heated, such as to boil all or a portion of the working fluid flowing through the sensor 500. The sensor 500 measures or detects the pressure of the working fluid flowing through the pipe 501 and provides the measurement to the control module 50. For example, the sensor 500 may measure or detect a differential pressure measurement of the working fluid flowing through the pipe 501 at a fixed dimension 506 (*i.e.,* height of the pipe 501).

In certain aspects, the sensor 500 is positioned external to the pipe 501 (*e.g.,* attached to the pipe 501). In certain other aspects, the sensor 500 is disposed in the pipe 501 such that the working fluid directly contacts the sensor 500 as it flows through the pipe 501.

In various aspects, concentrations of the first refrigerant (A) and the second refrigerant (B) are calculated based on the pressure measurement of the sensor 500 and stored information. The stored information includes a first density of the first refrigerant (A) and a second density of the second refrigerant (B) that is different from the first density. The first and second densities may be based on temperatures that are known (e.g., based on settings and/or assumptions based on other system characteristics, or detected. Thus, the stored information may include temperature-density data for the first and second refrigerants. After receiving the pressure measurement from the sensor 500, the control module 50 may calculate or determine a first concentration of the first refrigerant and a second concentration of the second refrigerant as a function of the first density, the second density, and the pressure measurement. In some embodiments, the composition of the working fluid is calculated based only on the pressure measurement and stored information. In some embodiments, the calculating is performed based on detected pressure and stored information, independent of any other detected characteristics.

The composition of the blended working fluid is determined by the calculation: ${C}_{wf = \frac{{P}_{m} - {P}_{A}}{{P}_{B} - {P}_{A}}}$ where *C_{wf}* is the concentration of the blended working fluid, *Pₘ* is the measured pressure of working fluid flowing through the pipe 501, *P_{A}* is an estimated pressure of the first refrigerant (A) based on the first density, and *P_{B}* is an estimated pressure of the second refrigerant (B) based on the second density. The pressure of the first refrigerant (*P_{A}* ) and the second refrigerant (*P_{B}*) may be estimated based on known relationships (e.g., formulas) and/or stored information.

FIG. 6 shows a schematic of another example of the sensor 600 in communication with the control module 50 (shown in FIG. 3). In other words, the control module 50 receives data from the sensor 600. The sensor 600 may be a capacitance sensor. The sensor 600 may be disposed within the fluid conduit 22, such that the working fluid flows around the sensor 600.

In various aspects, a concentration of the first refrigerant (A) and the second refrigerant (B) is calculated based on the capacitance measurement of the sensor 600 and stored information. The stored information includes a first dielectric constant of the first refrigerant (A) and a second dielectric constant of second refrigerant (B) that is different from the first dielectric constant. The sensor 600 measures or detects a pressure or capacitance of the working fluid based on a current of the working fluid and provides the measurement to the control module 50. In some embodiments, the first dielectric constant and the second dielectric constant are determined based on a previously detected measurement (e.g., partial pressure of each component) and stored tables in the system memory.

After receiving the capacitance measurement from the sensor 600, the control module 50 may calculate or determine a first concentration of the first refrigerant (A) and a second concentration of the second refrigerant (B) as a function of the first dielectric constant, the second dielectric constant, and the capacitance measurement. In some embodiments, the calculating is performed based on the detected capacitance and stored information, independent of other detected characteristics (e.g., real-time detected characteristics).

FIG. 7 shows a schematic of another example of the sensor 700 in communication with the control module 50 (shown in FIG. 3). In other words, the control module 50 receives data from the sensor 700. The sensor 700 may be an acoustic velocity sensor. In one example, the sensor 700 may be a sonic velocity sensor. The sensor 700 may include an acoustic transmitter 702 and an acoustic receiver 704 positioned downstream of the acoustic transmitter 702. When the sensor 700 is a sonic velocity sensor, the sensor 700 may include a sonic transmitter 702 and a sonic receiver 704 positioned downstream of the sonic transmitter 702. Working fluid flows in the fluid conduit 22 between the acoustic transmitter 702 and the acoustic receiver 704.

In various aspects, a concentration of the first refrigerant (A) and the second refrigerant (B) is calculated based on the acoustic velocity measurement of the sensor 700 and stored information. The stored information includes a first liquid acoustic velocity of the first refrigerant (A) and a second liquid acoustic velocity of the second refrigerant (B) that is different from the first liquid acoustic velocity. In some embodiments, the first liquid acoustic velocity is a first acoustic velocity and the second liquid acoustic velocity is a second acoustic velocity. In some embodiments, the first liquid acoustic velocity and the second liquid acoustic velocity are estimated based on a previously detected measurement and stored tables in the system memory.

When flowing through the fluid conduit 22, the first refrigerant and the second refrigerant may transmit different frequencies. The sensor 700 measures acoustic velocity of the working fluid and provides the measurement to the control module 50. After receiving the acoustic velocity measurement from the sensor 700, the control module 50 may calculate a first concentration of the first refrigerant (A) and a second concentration of the second refrigerant (B) as a function of the first liquid acoustic velocity, the second liquid acoustic velocity, and the acoustic velocity measurement. In some embodiments, the composition of the working fluid is calculated based only on the acoustic velocity measurement and stored information. In some embodiments, the calculating is performed based on the detected acoustic velocity and stored information, independent of other detected characteristics.

In certain aspects, the control module 50 is configured to determine a composition of the working fluid utilizing more than one sensor measurement (*e.g.,* a combination of sensor measurements). FIG. 8 shows another example schematic of the first sensor 800, the second sensor 802, the third sensor 804, and the fourth sensor 806 that each measure a characteristic of working fluid in the climate control system 20. The control module 50 (shown in FIG. 3) is in communication with each of the first sensor 800, the second sensor 802, the third sensor 804, and the fourth sensor 806. In other words, the control module 50 receives data from the sensors 800, 802, 804, 806. The control module 50 determines a concentration of the working fluid based on measurements from each of the sensors 800, 802, 804, 806. In certain aspects, the control module 50 is configured to control an amount of working fluid exiting the gas-liquid separator 48. Specifically, the control module 50 may be utilized in climate control systems including a liquid pump positioned downstream of the gas-liquid separator 48 (*see, e.g.,* climate control system 920 of FIG. 9 and climate control system 1020 of FIG. 10).

The first sensor 800 may be a pressure sensor. The first sensor 800 may be disposed in the gas-liquid separator 48. The first sensor 800 is configured to measure the pressure of the working fluid in the gas-liquid separator 48.

The second sensor 802 may be a temperature sensor. The second sensor 802 may be disposed in the gas-liquid separator 48. The second sensor 802 is configured to measure the temperature of the working fluid in the gas-liquid separator 48. In certain aspects, one of the first sensor 800 or the second sensor 802 may be omitted.

The third sensor 804 may be a flow rate sensor. The third sensor 804 may be positioned immediately upstream from, immediately downstream from, or disposed within the compressor 62. The compressor 62 is positioned downstream of the gas-liquid separator 48 and receives a first portion of working fluid in a vapor phase from the gas-liquid separator 48 (*see, e.g.,* vapor steam 38 of FIGS. 9 and 10). The third sensor 804 is configured to measure a first flow rate of the first portion of working fluid flowing through the compressor 62.

The fourth sensor 806 may be a flow rate sensor. The fourth sensor 806 may be positioned immediately upstream from, immediately downstream from, or disposed within a liquid pump 64 (the liquid pump 64 is described in greater detail below in the discussion accompanying FIGS. 9 and 10). The liquid pump 64 is positioned downstream of the gas-liquid separator 48 and receives a second portion of working fluid in a multiphase or liquid phase from the gas-liquid separator 48 (*see, e.g.,* liquid steam 40 of FIGS. 9 and 10). The fourth sensor 806 is configured to measure a second flow rate of the second portion of working fluid flowing through the liquid pump 64.

The pressure measurement of the first sensor 800, temperature measurement of the second sensor 802, flow rate measurement of the third sensor 804, and flow rate measurement of the fourth sensor 806 are received by the control module 50. The control module 50 may determine or calculate a first concentration of the first refrigerant (A) and a second concentration of the second refrigerant (B) as a function of the pressure measurement from the first sensor 800, temperature measurement from the second sensor 802, first flow rate measurement from the third sensor 804, and second flow rate measurement from the fourth sensor 806. The composition of the working fluid *C_{wf}* is then calculated by the equation: ${C}_{wf} = \frac{\left({C}_{l}⋅{{m}_{p}}^{.}\right) + \left({C}_{v}⋅{{m}_{c}}^{.}\right)}{\left({{m}_{p}}^{.}+{{m}_{c}}^{.}\right)}$ where *Cᵥ* is the first concentration of the first refrigerant (A), *m_{c}* is the first flow rate, *Cₗ* is the second concentration of the second refrigerant (B), and *mₚ* is the second flow rate.

FIG. 9 shows another embodiment of a climate control system in the form of a heat pump system 920 (also referred to as the "climate control system 920"). The climate control system 920 is the same as or similar to the climate control system 20 except as otherwise described below. To the extent that the components and working fluid flow points are similar to those described in FIG. 1, the same reference numbers will be used and unless otherwise addressed, for brevity, will not be discussed again herein. As will be appreciated by those of skill in the art, any of the features and components described in the context of FIG. 9 may be used individually or in combination in the climate control system described in the context of FIGS. 1 and 10.

Working fluid enters the condenser 40 at Point 1 and exits the condenser 40 at Point 2 as the condensed working fluid stream 32. The working fluid passes through the liquid-to-suction heat exchanger 42 and is directed to the expansion valve 46. The working fluid then enters the evaporator 58 at Point 5 and exits the evaporator 58 at Point 6 as the evaporated working fluid stream 36. The working fluid passes through the liquid-to-suction heat exchanger 42. At Point 7, the working fluid is directed to the gas-liquid separator 48.

The gas-liquid separator 48 separates the working fluid into a first portion of working fluid in a vapor state and a second portion of multiphase or liquid phase working fluid in a second state. The working fluid exits the gas-liquid separator 48 in two distinct fluid streams.

At Point 8, the first portion of the working fluid exits the gas-liquid separator 48 in a vapor working fluid stream 38. The first portion of the working fluid is directed to the compressor 62 positioned downstream of the gas-liquid separator 48.

At Point 9, the second portion of the working fluid exits the gas-liquid separator 48 in a multiphase or liquid working fluid stream 40. The second portion of the working fluid is directed to the liquid pump 64. The liquid pump 64 is configured to increase the pressure of the working fluid. After passing through the liquid pump 64, the second portion of the working fluid exiting the liquid pump 64 and the first portion of the working fluid exiting the compressor 62 are combined in the pressurized gas stream 30 and recirculated through the condenser 40 at Point 1.

The climate control system 920 includes one or more control modules 50 associated with one or more components (e.g., the gas-liquid separator 48, compressor 62, and/or liquid pump 64). The one or more control modules 50 are configured to detect a concentration of working fluid flowing through the component and to modulate and/or control the amount of working fluid entering or exiting the component.

FIG. 10 shows another embodiment of a climate control system in the form of a heat pump system 1020 (also referred to as the "climate control system 1020"). The climate control system 1020 is the same as or similar to the climate control system 920 except as described below. To the extent that the components and working fluid flow points are similar to those described in FIG. 1 and/or FIG. 9, the same reference numbers will be used and unless otherwise addressed, for brevity, will not be discussed again herein. As will be appreciated by those of skill in the art, any of the features and components described in the context of FIG. 10 may be used individually or in combination in the climate control system described in the context of FIGS. 1 and 9.

The climate control system 1020 includes one or more reversing valves or four way valves 70 (e.g., a pair of reversing valves 70). The reversing valves 70 facilitate the use of both heating and cooling functions in the climate control system 1020. The reversing valves 70 maintain working fluid in counterflow to air in both heating and cooling operational modes. As will be appreciated by those of skill in the art, the climate control system 1020 may direct working fluid flow in different directions in the system.

The climate control system 1020 includes one or more control modules 50 associated with one or more components (e.g., the gas-liquid separator 48, compressor 62, liquid pump 64, and/or reversing valves 70). The one or more control modules 50 are configured to detect a concentration of working fluid flowing through the component and to modulate and/or control the amount of working fluid entering or exiting the component.

FIG. 11 shows another embodiment of a climate control system 1120. The climate control system 1120 is the same as or similar to the climate control system 20 except as described below. To the extent that the components and working fluid flow points are similar to those described in FIG. 1, FIG. 9, and/or FIG. 10, the same reference numbers will be used and unless otherwise addressed, for brevity, will not be discussed again herein. As will be appreciated by those of skill in the art, any of the features and components described in the context of FIG. 11 may be used individually or in combination in the climate control system described in the context of FIGS. 1, 9 and 10.

Working fluid enters the condenser 40 at Point 1 and exits the condenser 40 at Point 2 as the condensed working fluid stream 32. The working fluid passes through the liquid-to-suction heat exchanger 42 and is directed to the expansion valve 46. The expansion valve 46 is positioned downstream of the liquid-to-suction heat exchanger 42 and upstream of a storage vessel 80 (the "receiver 80"). The working fluid is then directed to the receiver 80. In the receiver 80, working fluid circulating through the fluid conduit 22 may be stored and concentrated. The receiver 80 receivers the working fluid that may include working fluid in both a vapor and a liquid phase. However, the majority of the fluid may be in the liquid phase.

The working fluid exits the receiver 80 and is directed to the expansion valve 56. The expansion valve 56 is positioned downstream of the receiver 80 and upstream of the evaporator 58. The operation of the expansion valve 56 may be controlled by the control module 50. The expansion valve 56 is configured to reduce pressure of the working fluid.

The working fluid then enters the evaporator 58 at Point 5 and exits the evaporator 58 at Point 6 as the evaporated working fluid stream 36. The working fluid passes through the liquid-to-suction heat exchanger 42. Then, the working fluid is directed to the accumulator 60. Then, the working fluid is directed to the compressor 62. The working fluid exits the compressor 62 as the high pressure vapor or gas stream 30 and is directed to the condenser 40.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method of determining a composition of a blended working fluid in a climate control system, the method comprising:
detecting a pressure of the blended working fluid in a separator vessel with a first sensor inside the separator vessel, the separator vessel configured to separate a first portion of the blended working fluid in a first phase and a second portion of the blended working fluid in a second phase;
detecting a temperature of the blended working fluid in the separator vessel with a second sensor inside the separator vessel;
detecting a first flow rate of the first portion of the working fluid when the first portion of the working fluid flows through a compressor with a third sensor associated with the compressor, wherein the compressor is downstream of the separator vessel;
detecting a second flow rate of the second portion of the working fluid when the second portion of the working fluid flows through a pump with a fourth sensor associated with the pump, wherein the pump is downstream of the separator vessel; and
determining a composition of the blended working fluid by
calculating a concentration of a first refrigerant of the blended working fluid based on the pressure, the temperature, the first flow rate, and the second flow rate; and
calculating a concentration of a second refrigerant of the blended working fluid based on the pressure, the temperature, the first flow rate, and the second flow rate.

2. The method of claim 1, further comprising modifying an operation of a component of the control system based on the composition.

3. The method of claim 1 or 2, further comprising adding a quantity of (i) the first refrigerant, (ii) the second refrigerant, or both (i) and (ii) to the climate control system based on the composition.

4. The method of any one of claims 1-3, wherein the blended working fluid is a high glide refrigerant blend.

5. The method of any one of claims 1-4, wherein the third sensor is a flow rate sensor measuring the first flow rate of the first portion of the working fluid in a vapor phase between the compressor and the separator vessel.

6. The method of any one of claims 1-5, wherein the fourth sensor is a flow rate sensor measuring the second flow rate of the second portion of the working fluid in a liquid phase or multiphase between the pump and the separator vessel.

7. The method of any one of claims 1-6, wherein the concentration of the first refrigerant of the blended working fluid and the concentration of the second refrigerant of the blended working fluid are calculated as a function of the pressure measured by the first sensor, the temperature measured by the second sensor, the first flow rate measured by the third sensor, and the second flow rate measured by the fourth sensor.

8. The method of claim 7, further comprising calculating a composition of the blended working fluid *Cw_{f}* by the equation: ${C}_{wf} = \frac{\left({C}_{l}⋅{{m}_{p}}^{.}\right) + \left({C}_{v}⋅{{m}_{c}}^{.}\right)}{\left({{m}_{p}}^{.}+{{m}_{c}}^{.}\right)}$ where *Cᵥ* is the concentration of the first refrigerant, *m_{c}* is the first flow rate, *Cₗ* is the concentration of the second refrigerant, and *mₚ* is the second flow rate.

9. The method of any one of claims 1-8, further comprising controlling an operation of the climate control system based on the concentration of the first refrigerant, the concentration of the second refrigerant, and/or the composition of the blended working fluid.

10. The method of claim 9, wherein the controlling operation of the climate control system includes operating at least one of: a condenser, heat exchanger, expansion valve, gas-liquid, filter, expansion valve, evaporator, accumulator, compressor, storage vessels and/or liquid pumps.

11. The method of claim 9 or claim 10, wherein the controlling operation of the climate control system includes opening and/or closing valves to modulate the flow of the blended working fluid through the climate control system.

12. The method of any one of claims 9-11, wherein the controlling operation of the climate control system includes modifying the composition of the blended working fluid.

13. The method of claim 12, wherein the modifying the composition of the blended working fluid includes adding a quantity of the first refrigerant and/or the second refrigerant to the climate control system).

14. The method of any one of claims 9-13, wherein the controlling operation of the climate control system includes comparing the concentration of the first refrigerant, the concentration of the second refrigerant, and/or the composition of the blended working fluid to a stored threshold.

15. The method of claim 14, wherein the controlling operation of the climate control system includes controlling one or more components of the climate control system to modify its operation based on the comparing to the stored threshold.
